Europäisches Patentamt

European Patent Office

Office européen des brevets

(19)

(11) Veröffentlichungsnummer: **0 190 395**
**B1**

(12)

# EUROPÄISCHE PATENTSCHRIFT

(45) Veröffentlichungstag der Patentschrift: 23.01.91

(51) Int. Cl.⁵: **B 01 D 53/34**

(21) Anmeldenummer: 85111392.8

(22) Anmeldetag: 10.09.85

(54) **Verfahren zur Entfernung von Thiosulfat.**

(30) Priorität: 07.02.85 DE 3504072

(43) Veröffentlichungstag der Anmeldung:
13.08.86 Patentblatt 86/33

(45) Bekanntmachung des Hinweises auf die
Patenterteilung:
23.01.91 Patentblatt 91/04

(84) Benannte Vertragsstaaten:
AT BE DE FR NL

(56) Entgegenhaltungen:
DE-A-2 905 957
US-A-3 859 416

(73) Patentinhaber: Grillo-Werke AG
Weseler Strasse 1
D-4100 Duisburg-Hamborn (DE)

(72) Erfinder: Lowicki, Norbert, Dr.-Ing. Dipl.-Chem.
Walramsweg 26
D-4100 Duisburg 1 (DE)
Erfinder: Bunthoff, Klaus, Dr. Dipl.-Chem.
Dahlmannstrasse 18
D-4100 Duisburg 11 (DE)
Erfinder: Driemel, Klaus, Dipl.-Ing.
Am langen Bongert 3
D-4100 Duisburg 25 (DE)
Erfinder: Nies, Helmut
Am Gildenkamp 19
D-4134 Rheinberg 3 (DE)

(74) Vertreter: Werner, Hans-Karsten, Dr. et al
Deichmannhaus am Hauptbahnhof
D-5000 Köln 1 (DE)

EP 0 190 395 B1

## Beschreibung

Gegenstand der vorliegenden Erfindung ist ein Verfahren zur Entfernung von Thiosulfat aus schwefeldioxidhaltigen Lösungen durch Erhitzen im sauren Medium. Insbesondere betrifft es die Zersetzung von Thiosulfat aus schwefeldioxidhaltigen Lösungen, die als Absorbenslösung für Schwefeldioxid verwendet werden. Derartige Absorbenslösungen enthalten oftmals organische Säuren wie Glutarsäure, Maleinsäure, Malonsäure, Bernsteinsäure, Adipinsäure, Oxalsäure, Phthalsäure und/oder Zitronensäure. Prinzipiell kommen aber auch gepufferte Lösungen schwacher anorganischer Säuren in Frage, z.B. schweflige Säure, Borsäure und Phosphorsäure.

Aus der DE-PS 29 05 957 ist bekannt, daß die Absorptionsleistung von derartigen Lösungen durch steigende Sulfationenkonzentration negativ beeinflußt wird. Es ist weiterhin hieraus bekannt, daß der Anstieg der Sulfationenkonzentration in erheblichem Umfang durch die Anwesenheit von Thiosulfat beschleunigt wird. Das Verfahren gemäß DE-PS 29 05 957 betrifft daher die Entfernung und Zerstörung des Thiosulfats durch den Zusatz von Schwermetallverbindungen zu der Waschlösung, wobei sich im sauren Bereich stabile, schwerlösliche Metallsulfide bilden. Auf alle Fälle muß bei dem dort beschriebenen Verfahren der Thiosulfatgehalt so niedrig gehalten werden, daß keinesfalls ein kritischer Grenzwert erreicht wird, bei dem sich das Thiosulfat plötzlich zersetzt und der Absorptions/ Desorptionsprozeß durch verstärkte Bildung von Sulfationen und elementarem Schwefel zum Erliegen kommt. Durch den Zusatz der Schwermetallkationen ist es möglich, den Gehalt an Thiosulfat auf maximal 25 g/l zu begrenzen.

Bei dem Verfahren gemäß DE-PS 29 05 957 ist es weiterhin notwendig, die gebildeten Schwermetallsulfide aus dem prozeß auszuschleusen und sie wieder aufzuarbeiten. Die Aufarbeitung dieser Nebenprodukte ist relativ aufwendig und kostspielig. Weiterhin ist zu beachten, daß diese Schwermetallsulfide dazu neigen, an den Wandungen der Apparaturen zu haften und dort auch bei Edelstählen Korrosion hervorzurufen.

Aufgabe der vorliegenden Erfindung ist somit, ein verbessertes Verfahren zur Entfernung von Thiosulfat aus schwefeldioxidhaltigen Lösungen zu entwickeln, bei welchem nach Möglichkeit der Zusatz von Schwermetallkationen vermieden werden kann und welches sicher, einfach und kostengünstig durchführbar ist.

Es ist aus der Literatur bekannt, (vgl. Gmelin 8 1960, 9 B2) daß Thiosulfat sich im sauren Medium in der Hitze bei pH-Werten von ca. 2 bevorzugt zu elementarem Schwefel und Sulfat zersetzt. Danach erschien es zunächst möglich, das Thiosulfat aus der Absorbenslösung durch eine derartige einfache Maßnahme zu entfernen. Versuche, die Absorptionslösung in dieser Weise aufzuarbeiten führten jedoch zu dem überraschenden Ergebnis, daß zwar zunächst das Thiosulfat unter Bildung von Sulfat und elementarem Schwefel zerfällt. Sobald eine derartige Lösung wieder auf pH-Werte von 4,5 bis 6,0 gebracht wird, bildet sich jedoch rasch neues Thiosulfat. Die Aussage in Gmelin, Seite 886, Zeile 6 von unten bis Seite 887, Zeile 9, ist somit nicht richtig. Es trifft nicht zu, daß bei dieser Zersetzung Trithionat als Zwischenprodukt gebildet wird, welches anschließend zu Sulfat und Schwefel zerfällt. Statt dessen wurde gefunden, daß aus intermediär entstandenem Schwefeldioxid und Schwefelwasserstoff Polythionate als konkurrierende Endprodukte der Zersetzungsreaktion gebildet werden.

Es gibt somit kein Maximum der Zerfallsgeschwindigkeit des Thiosulfats in Abhängigkeit der Wasserstoffionen-Konzentration (vgl. Gmelin, Seite 877, Absatz 4). Dieses angebliche Maximum wird offensichtlich durch die Bildung von Polythionaten vorgetäuscht, aus denen sich beim Neutralisieren neues Thiosulfat rückbildet.

Die Untersuchungen der Anmelderin haben gezeigt, daß die Bildung von Polythionaten unterdrückt werden muß, da deren Bildung durch den starken Überschuß an Schwefeldioxid und die gute Beständigkeit der Polythionate im sauren Medium begünstigt wird. Es wurde weiterhin festgestellt, daß es überraschenderweise möglich ist, die Bildung von Polythionaten bei der Zersetzung von Thiosulfat in Gegenwart von überschüssigem Schwefeldioxid unter Zugabe von Mineralsäuren zu unterdrücken bzw. ganz zu verhindern. Diese erfolgt dadurch, daß die Lösung in einer ersten Stufe auf einen pH-Wert von 3,8 bis 4,2 eingestellt und bei Temperaturen unter 100°C das als Sulfit gebundene Schwefeldioxid aus der Lösung entfernt wird und in einer zweiten Stufe der pH-Wert auf unter 2,5 abgesenkt und bei Temperaturen über 100°C alle bei der Zersetzung des Thiosulfats entstehende Gase im statu nascendi aus der Lösung entfernt werden. Im Gegensatz zu der Aussage von Gmelin, Seite 883, letzter Absatz, zerfällt das Thiosulfat noch nicht unter den Bedingungen der ersten Stufe, d.h. beim pH-Wert von 3,8 bis 4,2 und bei längerem Erhitzen auf Temperaturen von 80 bis 100°C.

Durch die Zersetzung des Sulfits und die Entfernung des Schwefeldioxids aus der Lösung steigt der pH-Wert an.

Es ist daher notwendig, in der ersten Stufe den pH-Wert zu überwachen und durch Zugabe von weiterer Säure in dem genannten Bereich zu halten. Vorzugsweise wird die erste Stufe bei Temperaturen zwischen 80 und 100°C durchgeführt. Unterhalb von 80°C läuft der Zerfall von schwefliger Säure in Wasser und Schwefeldioxid noch recht langsam. Erst oberhalb von 100°C beginnt eine merkliche Zersetzung von Thiosulfat, was erfindungsgemäß vermieden werden soll.

Die erste Stufe wird beendet, sobald alle in der Lösung vorhandenen Polythionate in Thiosulfat umgewandelt sind. Dies macht sich unter anderem dadurch bemerkbar, daß unter den genannten Bedingungen kein weiteres Schwefeldioxid entweicht. Prinzipiell ist es jedoch auch möglich, die Polythionate messend analytisch zu verfolgen und die erste Stufe zu beenden, wenn der Gehalt an Polythionaten einen vorgegebenen Grenzwert unterschritten hat.

In der zweiten Stufe wird das Verfahren vorzugsweise im pH-Bereich von 1 bis 2 durchgeführt. Die Temperatur wird vorzugsweise im Bereich von 102 bis 105°C gehalten. Wichtig ist, daß die bei der Zersetzung von Thiosulfat entstehenden Gase, nämlich Schwefelwasserstoff und Schwefeldioxid sofort und vollständig, d.h. praktisch im statu nascendi, aus der Lösung entfernt werden. Anderenfalls reagieren diese Gase zusammen mit den übrigen Bestandteilen der Lösung unter Bildung von neuen Polythionaten. Um diese Gase sofort und vollständig aus der Lösung zu entfernen, wird vorzugsweise ein Inertgasstrom durch die Lösung hindurchgeleitet. Besonders bewährt hat sich als Inertgas überhitzter Wasserdampf, der mit Temperaturen von 110 bis 140°C in die Lösung eingeleitet wird.

Dieser Wasserdampf sorgt gleichzeitig dafür die Temperatur der Lösung in den bevorzugten Bereich von 102 bis 105°C zu halten. Prinzipiell ist es jedoch auch möglich, andere Inertgase wie Stickstoff zu verwenden und die Lösung durch andere Wärmequellen am Siedepunkt zu halten. Bei Temperaturen unter 95°C gelingt es nicht, das Schwefeldioxid rasch und vollständig aus der Lösung zu entfernen, so daß es sich mit dem sich bildenden Schwefelwasserstoff im Augenblick seiner Entstehung bereits wieder zu Polythionaten umsetzen kann. Erst bei Temperaturen oberhalb von 100°C gelingt es, die Konzentration an undissoziierter schwefliger Säure so gering zu halten, daß sich keine Polythionate mehr bilden.

Die zweite Stufe wird beendet, sobald das vorhandene Thiosulfat praktisch vollständig zersetzt ist. Auch dies kann prinzipiell dadurch festgestellt werden, daß der Wasserdampf keine gasförmigen Zersetzungsprodukte des Thiosulfats mehr enthält. Es ist jedoch auch möglich, den Gehalt an Thiosulfat messend analytisch zu verfolgen und die zweite Verfahrensstufe zu beenden, sobald ein vorgegebener Meßwert unterschritten ist.

Da die in dieser Weise aufgearbeitete Absorbenslösung frei von Thiosulfat und Polythionsäuren ist, kann sie ohne weiteres auf den für die Absorption von Schwefeldioxid notwendigen pH-Wert von 5 bis 5,5 neutralisiert werden, ohne daß der Thiosulfatgehalt wieder ansteigt. Bei der erfindungsgemäßen Aufarbeitung der Absorbenslösung fallen somit als Nebenprodukte nur elementarer Schwefel und reines Glaubersalz an, die direkt verwertbar sind. Aus den kondensierten Brüden des Dampfes in der zweiten Stufe kann nach Abtrennung des elementaren Schwefels das SO₂ abgetrennt und in das Verfahren zugeleitet werden.

Das erfindungsgemäße Verfahren ist in dem nachfolgenden Beispiel näher läutert.

### Beispiel

Eine Menge von 5 m³ aus dem Kreislauf ausgeschleuster Absorbenslösung mit einem Gehalt von ca. 25 Gew.-% Glutarsäure wird in einem mit Rührwerk versehenen beheizbaren Behälter mit Schwefelsäure auf einen pH von 4,0 eingestellt und auf 85°C erwärmt Das beim Rühren der Lösung entweichende SO₂ wird abgesaugt und der Absorption wieder zugeführt. Der während dieser Operation ansteigende pH-Wert der Lösung wird durch weitere Säurezusätze auf 3,9 bis 4,0 konstant gehalten. Nach Beendigung des SO₂-Austritts aus der Lösung wird diese mit Schwefelsäure auf pH 2,0 eingestellt und unter Einblasen von Dampf von ca. 120°C auf eine Temperatur von 103° bis 105°C aufgeheizt. Die Dampfmenge wird im Verlauf dieser Operation während 240 Minuten von 50 kg/h auf 200 kg/h gesteigert. Der entweichende Brüden enthält etwas H₂S, das durch gleichzeitig im Überschuß vorhandenes SO₂ bei der Kondensation an gekühlten Flächen zu elementarem Schwefel umgesetzt wird. Dieser und der im Behälter aus der Lösung ausgefallene Schwefel werden abfiltriert und in den Gesamtproduktionsprozeß zurückgeführt.

Das aufgearbeitete Absorbens wird nach dem Abkühlen durch Zusatz von NaOH auf pH 5,0 eingestellt und das auskristallisierte Glaubersalz in üblicher Weise abgeschieden. Die fertige Lösung geht in den Absorptionskreislauf zurück.

## Patentansprüche

1. Verfahren zur Entfernung von Thiosulfat aus schwefeldioxidhaltigen Lösungen durch Erhitzen im sauren Medium, dadurch gekennzeichnet, daß die Lösung in einer ersten Stufe auf einen pH-Wert von 3,8 bis 4,2 eingestellt und bei Temperaturen unter 100°C das als Sulfit gebundene Schwefeldioxid aus der Lösung entfernt wird und in einer zweiten Stufe der pH-Wert auf unter 2,5 abgesenkt und bei Temperaturen über 100°C alle bei der Zersetzung des Thiosulfats entstehenden Gase im statu nascendi aus der Lösung entfernt werden.

2. Verfahren gemäß Anspruch 1, dadurch gekennzeichnet, daß in der ersten Stufe die Temperatur im Bereich 80 bis 100°C gehalten wird.

3. Verfahren gemäß einem der Ansprüche 1 oder 2, dadurch gekennzeichnet, daß die erste Stufe erst beendet wird, wenn die Polythionate nahezu restlos in Thiosulfat umgewandelt sind.

4. Verfahren gemäß einem der Ansprüche 1 bis 3, dadurch gekennzeichnet, daß in der zweiten Stufe der pH-Wert im Bereich von 1 bis 2 gehalten wird.

5. Verfahren gemäß einem der Ansprüche 1 bis 4, dadurch gekennzeichnet, daß die Temperatur im Bereich von 102 bis 105°C gehalten wird.

6. Verfahren gemäß einem der Ansprüche 1 bis 5, dadurch gekennzeichnet, daß in der zweiten Stufe durch die Lösung ein Inertgasstrom durchgeleitet wird.

7. Verfahren gemäß Anspruch 6, dadurch gekennzeichnet, daß als Inertgas überhitzter Wasserdampf von 110 bis 140°C verwendet wird.

8. Verfahren gemäß einem der Ansprüche 1 bis 7, dadurch gekennzeichnet, daß die zweite Stufe erst beendet wird, wenn sich das Thiosulfat vollständig zersetzt hat.

## Revendications

1. Procédé pour enlever le thiosulfate de solutions contenant du dioxyde de soufre par chauffage en milieu acide,
caractérisé en ce que, dans une première étape, on amène la solution à un pH de 3,8 à 4,2 et on élimine de la solution le dioxyde de soufre combiné sous forme de sulfite à une température inférieure à 100°C, et, dans une seconde étape, on abaisse le pH jusqu'en dessous de 2,5 et, à une température supérieure à 100°C, on élimine de la solution tous les gaz qui se forment à l'état naissant par la décomposition du thiosulfate.

2. Procédé selon la revendication 1, caractérisé en ce que, dans la première étape, on maintient la température entre 80 à 100°C.

3. Procédé selon l'une des revendications 1 ou 2, caractérisé en ce qu'on ne termine la première étape que quand les polythionates sont transformés en thiosulfate à peu près sans résidu.

4. Procédé selon l'une des revendications 1 à 3, caractérisé en ce que, dans la seconde étape, on maintient le pH entre 1 et 2.

5. Procédé selon l'une des revendications 1 à 4, caractérisé en ce que on maintient la température entre 102 à 105°C.

6. Procédé selon l'une des revendications 1 à 5, caractérisé en ce que, dans la seconde étape, on fait passer un gaz inerte à travers la solution.

7. Procédé selon la revendication 6, caractérisé en ce qu'on utilise, comme gaz inerte, de la vapeur surchauffée de 110° à 140°C.

8. Procédé selon l'une des revendications 1 à 7, caractérisé en ce qu'on n'arrête la seconde étape que quand le thiosulfate s'est complètement décomposé.

## Claims

1. A process for removing thiosulfate from solutions containing sulfur dioxide by heating in an acidic medium, characterized in that in a first step the solution is adjusted to a pH value of from 3.8 to 4.2 and the sulfur dioxide bound as sulfite is removed from the solution at temperatures below 100°C, and in a second step the pH value is lowered to below 2.5 and at temperatures above 100°C all gases being formed upon the decomposition of the thiosulfate are removed in the nascent state from the solution.

2. The process according to claim 1, characterized in that in the first step the temperature is maintained within the range of from 80°C to 100°C.

3. The process according to any of claims 1 or 2, characterized in that the first step is terminated only after the polythionates have almost completely been converted into thiosulfate.

4. The process according to any of claims 1 to 3, characterized in that in the second step the pH value is maintained within the range of from 1 to 2.

5. The process according to any of claims 1 to 4, characterized in that the temperature is maintained within the range of from 102°C to 105°C.

6. The process according to any of claims 1 to 5, characterized in that in the second step an inert gas stream is passed through the solution.

7. The process according to claim 6, characterized in that superheated steam of from 110°C to 140°C is used as the inert gas.

8. The process according to any of claims 1 to 7, characterized in that the second step is terminated only after the thiosulfate has completely been decomposed.